# EUROPEAN PATENT APPLICATION

(11) **EP 3 822 242 A1**
(43) Date of publication of application: **19.05.2021**
(21) Application number: 19209469.6
(22) Date of filing: 15.11.2019
(51) Int. Cl.: C05C 3/00, C05C 9/00, C05D 3/00, C05D 9/02, C05G 3/90, C05G 5/12

(54) **UREA-BASED BLEND COMPOSITION AND METHOD FOR THE MANUFACTURE THEREOF**

(71) Applicant: Yara International ASA, 0277 Oslo (NO)
(72) Inventor: Colpaert, Filip, 9052 Zwijnaarde (BE); Donkers, Ellen, 4533 HS Terneuzen (NL); Van Belzen, Ruud, 4541 HJ Sluiskil (NL); Van de Walle, Tom, 9180 Moerbeke-Waas (BE); Van Elslande, Paul, 4541 HJ Sluiskil (NL)
(74) Representative: De Clercq & Partners

(57) **Abstract**

The invention relates to a solid, particulate, urea-based blend composition comprising a urea-based compound in particulate form, a component comprising an ammonium source in particulate form, a urease inhibitor of the type phosphoric triamide, an alkaline or alkaline-forming inorganic or organic compound that is able to interact with the component comprising an ammonium source in particulate form, selected from the group of metal oxides, metal carbamates, metal hydroxides, metal acetates and any mixtures thereof, or from the group of organic bases, such as ammonia, amines, amides, adenines, amidines, guanidines, anilines, carbamates, thiazoles, triazoles, pyridines; imidazoles, benzimidazoles, histidines, phosphazenes, and any mixture thereof, wherein the urea-based blend composition further comprises a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺. The composition according to the present disclosure has been stabilized against the degradation of a urease inhibitor of the type phosphoric triamide, in particular N-(n-butyl) thiophosphoric triamide (nBTPT) and the emission of ammonia during storage of these urea-based blend compositions has been lowered.

The invention further relates to a method for the manufacture of the claimed solid, particulate, urea-based blend composition.

## Description

### Field of the invention

This invention relates to a solid, particulate, urea-based blend composition comprising a urea-based compound in particulate form, a component comprising an ammonium source in particulate form, a urease inhibitor of the type phosphoric triamide, in particular N-(n-butyl) thiophosphoric triamide (nBTPT), and a cation source with improved properties for reducing ammonia loss during storage and by urease activity in the soil. The invention further relates to a method for the manufacture of a solid, particulate urea-based blend composition comprising a urea-based compound in particulate form, a component comprising an ammonium source in particulate form, and a urease inhibitor of the type phosphoric triamide, in particular N-(n-butyl) thiophosphoric triamide (nBTPT) and a cation source. The product is in particular suitable as a fertilizer.

### Background of the invention

Urea is the most common nitrogen-containing fertilizer. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is a basic element for any living system as a constituent of protein.

Urea is often used as such, but also as a component of a particulate blend, i.e. a physical blend or bulk blend, containing additional (primary, secondary or micro- nutrient) elements, such as potassium, phosphor, nitrogen and sulphur to obtain a particulate NPK(S), NP(S) or NK(S) blend, and other elements such as magnesium and calcium (secondary nutrients). In that respect, urea can easily be blended with, for example, potassium sulphate (sulphate of potash, SOP) and potassium magnesium sulphate (sulphate of potash magnesia). Urea can also be blended with sodium nitrate (Chilean nitrate 16-0-0), ammonium sulphate (sulphate of ammonia), urea ammonium sulphate (UAS), mono ammonium phosphate (MAP), di-ammonium phosphate (DAP), rock phosphate, potassium chloride (muriate of potash, MOP) and urea calcium nitrate (UCAN).

Particulate urea can hardly be mixed and stored as a blend with certain chemicals due to hygroscopic double salt formation or release of crystal water but can be mixed, and co-applied shortly after, with calcium nitrate, ammonium nitrate, calcium ammonium nitrate or limestone ammonium nitrate, ammonium sulphate nitrate, potassium ammonium nitrate (nitropotash), superphosphate, and triple superphosphate. A more detailed list can be found in "Guidance for the compatibility of fertilizer blending materials" by EFMA, Brussels, Belgium, June 2006.

Furthermore, urea particles can be "doped" or coated with elemental sulphur to supply sulphur, or indirectly sulphates, to the soil, in particular in sulphur-deficient soils.

Unfortunately, urea nitrogen cannot be assimilated directly by the plants and needs to be converted through hydrolysis into ammonium and nitrification into nitrate. Urea is first hydrolysed in the soil under the action of an enzyme, commonly called urease, to produce ammonia and carbon dioxide. Ureases are found in numerous bacteria, fungi, algae, plants and some invertebrates, as well as in soils, as a soil enzyme. Urea hydrolysis tends to increase the pH of its environment as the ammonia is dissolved into the water in the soil, and part of the ammonia can also be released into the atmosphere, a process called ammonia volatilization, thus becoming unavailable for the plant. About 50 weight% of nitrogen can sometimes be lost as a result of the volatilization of ammonia, all depending on the soil type, water content, pH, climate conditions, etc.

The availability of nitrogen, originating from urea, to the root system of plants can be improved by combining a urea-containing fertilizer (*i.e.* by incorporation or addition) with a urease inhibitor. Urease inhibitors are compounds that are capable of temporarily reducing the activity of the enzyme and slow down the rate at which urea is hydrolysed, avoiding peaks of ammonia concentration and therefore limiting the losses to the air. There are many compounds that can inhibit urease, but only a few that are non-toxic, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985).

An example of an effective urease inhibitor, disclosed in this patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-containing fertilizer, phosphoric triamide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

However, it has now been shown, as for example in WO2017081183 (Yara, 2017) and WO2017168288 (BASF, 2017), that urease inhibitors of the type phosphoric triamide, especially when applied as a liquid, which is the most common commercially available form, are not stable when in contact with other fertilizer sources such as ammonium sulphate or phosphate-containing fertilizers. Moreover, even a urease inhibitor of the type phosphoric triamide in an alkaline organic solvent, such as a mixture of propylene glycol and N-methylpyrrolidine, stabilised to allow for long storage time of the solution, is rapidly degraded once applied on a urea ammonium sulphate-based composition. Furthermore, the urease inhibitor of the type phosphoric triamide, also applied as a solid, is not stable when in contact with a urea ammonium sulphate-based composition.

WO2017042194 discloses a UAS-based composition comprising a urease inhibitor of the type phosphoric triamide and an alkaline or alkaline-forming compound such as calcium oxide (CaO), calcium carbonate (CaCO3), zinc oxide (ZnO) and ethanolamine. The alkaline or alkaline-forming compound increases the stability of the urease inhibitor when both compounds are coated on UAS granules. However, the inventors noted that such compositions release ammonia gas upon prolonged storage. Such a problem would occur for any urea-based blend composition comprising an ammonium source. Ammonium ions are another source of nitrogen for plants with a faster mode of action than urea, which needs to be broken down to ammonium first, so it is common to blend urea particles with ammonium-containing particles to obtain a faster response from the plants to the fertilizing action. However, an ammonia emission is not desirable from a safety point of view, so there is a need to prepare urea-based blend composition comprising a urease inhibitor and a stabilizer which increases the stability of the inhibitor but does not emit ammonia gas.

### Summary of the invention

Surprisingly, the inventors now found that the addition of a cation source comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺ increases or at least does not affect negatively the stability of the urease inhibitor of the type phosphoric triamide in the urea-based blend composition, and reduces the ammonia emission of the blend composition during storage.

In one aspect, the invention is concerned a solid, particulate, urea-based blend composition comprising a urea-based compound in particulate form, a component comprising an ammonium source in particulate form, a urease inhibitor of the type phosphoric triamide, an alkaline or alkaline-forming inorganic or organic compound that is able to interact with the component comprising an ammonium source in particulate form, selected from the group of metal oxides, metal carbamates, metal hydroxides, metal acetates and any mixtures thereof, or from the group of organic bases, such as ammonia, amines, amides, adenines, amidines, guanidines, anilines, carbamates, thiazoles, triazoles, pyridines; imidazoles, benzimidazoles, histidines, phosphazenes, and any mixture thereof, wherein the urea-based blend composition further comprises a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺.

In another aspect, the use of the urea-based blend composition according to the present disclosure as a fertilizer is disclosed.

In another aspect, a method for the manufacture of a solid, particulate, urea-based blend composition according to the present disclosure is provided. The method comprises the steps of: 1) providing a urea-based particulate material which is treated with a urease inhibitor in solid particulate or liquid form, in particular wherein the urease inhibitor is N-(n-butyl) thiophosphoric triamide (nBTPT); 2) providing a particulate material, comprising a component comprising an ammonium source; 3) providing an alkaline or alkaline-forming inorganic or organic compound that is able to interact with the component comprising an ammonium source in particulate form; 4) providing a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺; 5) mixing the components provided in steps 1), 2), 3) and 4) ; 6) optionally, applying an agent to the particulate compounds, wherein the agent that is able to increase at least the anticaking and/or water-repellence and/or anti-dusting properties of said urea-based blend composition.

In another aspect, a kit of parts for use with a urea-based blend composition is provided. The kit of parts comprises an alkaline or alkaline-forming inorganic or organic compounds that is able to interact with the component comprising an ammonium source in particulate form; a urease inhibitor of the type phosphoric triamide in solid particulate or liquid form, in particular wherein the urease inhibitor is N-(n-butyl) thiophosphoric triamide (nBTPT); a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺; optionally, an anti-caking and/or moisture repellent and/or anti-dusting agent.

With regard to the activity, without being bound by theory, it is hypothesised that the cation source is able to capture the ammonia liberated by the ammonium source created during storage, possibly by the reaction between the alkaline or alkaline-forming compound present in the composition.

### Brief description of the figures

Figure 1 describes the amount of nBTPT recovered after storage of urea-based compositions in bags at room temperature.
Figure 2 describes the amount of ammonia in vol% in containers containing urea-based compositions.
Figure 3 describes the amount of nBTPT recovered after storage of urea-based compositions in bags at room temperature.
Figure 4 describes the amount of ammonia in vol% in containers containing urea-based compositions.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compound" refers to one or more than one compound.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the urea-based blend composition.

Within the context of this application, with a particulate form is meant a physical form that can also be designated as granulated, prilled, crystalline, compacted, powdered, and the like, wherein the respective compound is in a small unit form.

Herein after, the alkaline or alkaline-forming inorganic or organic compound that is able to interact with the component comprising an ammonium source in particulate form is called a stabilizer.

In one aspect, the invention is concerned a solid, particulate, urea-based blend composition comprising a urea-based compound in particulate form, a component comprising an ammonium source in particulate form, a urease inhibitor of the type phosphoric triamide, an alkaline or alkaline-forming inorganic or organic compound that is able to interact with the component comprising an ammonium source in particulate form, selected from the group of metal oxides, metal carbamates, metal hydroxides, metal acetates and any mixtures thereof, or from the group of organic bases, such as ammonia, amines, amides, adenines, amidines, guanidines, anilines, carbamates, thiazoles, triazoles, pyridines; imidazoles, benzimidazoles, histidines, phosphazenes, and any mixture thereof, wherein the urea-based blend composition further comprises a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺.

From other fields of science, e.g. in water treatment, it is known that some metal complexes, for example those comprising a metal ion selected from the group of Zn²⁺, Fe²⁺, Fe³⁺, Cu⁺, Cu²⁺, Ni²⁺, Ag⁺, Pt²⁺, Ru²⁺, Co³⁺ and Cr³⁺, have the ability to exchange ligands with ammonia and form metal ammine complexes. Without being bound by theory, it is thought that ammonia is released in the products described in WO2017042194 by the reaction between the ammonium sulphate and the alkaline or alkaline-forming compound comprised in the compositions. It was envisioned that adding a metal salt or complex that is able to complex ammonia would be able to capture the ammonia released by the fertilizer. Surprisingly, it was observed that other metals, such as Fe²⁺, Fe³⁺, Mn²⁺ were also able to absorb ammonia and form metal ammine complexes.

Further, it was observed that these cation sources improve the stability of the urease inhibitor or at least do not lead to any significantly increased decomposition of the urease inhibitor present in the urea-based blend composition.

### Urease Inhibitor

In one embodiment, this disclosure is concerned with a solid, particulate, urea-based blend composition comprising a urease inhibitor of the type phosphoric triamide, in particular N-(n-butyl) thiophosphoric triamide (nBTPT), wherein the urease inhibitor of the type phosphoric triamide is a compound of formula I: 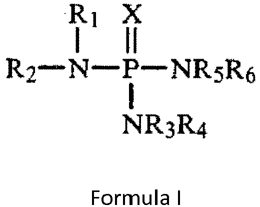 wherein:
X is oxygen or sulphur;
R1 is alkyl, cycloalkenyl, aralkyl, aryl, alkenyl, alkynyl, or cycloalkyl;
R2 is hydrogen, alkyl, cycloalkenyl, aralkyl, aryl, alkenyl, alkynyl, or cyclo-alkyl, or R1 and R2 together may form an alkylene or alkenylene chain which may optionally include one or more heteroatoms of divalent oxygen, nitrogen or sulphur completing a 4, 5, 6, 7, or 8 membered ring system; and
R3, R4, R5 and R6 are individually hydrogen or alkyl having 1 to 6 carbon atoms. In the present specification and claims, the term "phosphoric triamide compounds" is used to refer to the compounds of formula I.

The terms alkyl, cycloalkenyl, aralkyl, aryl, alkenyl, alkynyl, and cycloalkyl as used herein, refer to compounds having from up to 10 carbon atoms, in particular up to 6 carbon atoms. The lowest number of carbon atoms is between 1-3 depending on the structure of the substituent.

In one embodiment, the urease inhibitor is nBTPT. nBTPT is sold as the most effective known urease inhibitor and has the following chemical formula II:

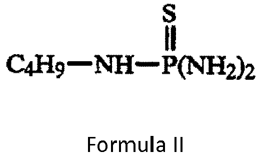

It should be understood that the term nBTPT, as used throughout this specification, refers not only to N-(n-butyl) thiophosphoric triamide in its pure form, but also to industrial grades of this compound which may contain up to 50 weight% impurities, depending on the method of synthesis and purification scheme(s), if any, employed in the production of the nBTPT.

In order to be effective, the urease inhibitor of the type phosphoric triamide, in particular N-(n-butyl) thiophosphoric triamide (nBTPT) is present in the urea-based composition at a level of 0.0001 to 1.0 weight%, in particular 0.02 to 0.2% weight%, more in particular 0.03 to 0.06 weight%, relative to the total weight of the urea-based composition. It was found that an amount of urease inhibitor between 0.0001 to 1.0 weight% is satisfying in the urea-based blend compositions of the present disclosure. In one embodiment, the urease inhibitor is present at a level of around 0.05 weight%.

In one embodiment, the weight ratio of urease inhibitor of the type phosphoric triamide to the alkaline or alkaline-forming inorganic or organic compound in the compositions according to the present disclosure ranges from 1:15 to 5:1, in particular from 1:10 to 2:1, more in particular from 1:5 to 2:1. In order to obtain a good stabilization effect of the urease inhibitor, it is desirable to adapt the amount of stabilizing agent, the alkaline or alkaline-forming inorganic or organic compound, to the amount of urease inhibitor used in the urea-based blend compositions. Too much stabilizer would only increase the manufacturing cost without improving the stabilization of the urease inhibitor, but too little stabilizer would not have the desired stabilizing effect. Examples of suitable inhibitor to stabilizer ratios are 1:1 or 2:1.

In one embodiment, the urease inhibitor can be a liquid at room temperature, a liquid at elevated temperature, or a solid which is dissolved (solution) or suspended (suspension) into a liquid carrier, all of which are different liquid forms of the urease inhibitor of the type phosphoric triamide, in particular N-(n-butyl) thiophosphoric triamide (nBTPT).

In one embodiment, the urease inhibitor is applied onto the urea-based compound in liquid or in particulate form, is melt-mixed with the urea-based compound, or a combination thereof.

In embodiments where the urease inhibitor of the type phosphoric triamide, in particular N-(n-butyl) thiophosphoric triamide (nBTPT), is used as a liquid, it may be used as a 0.1 to 75 weight% solution, in particular as a 15 to 30 weight% solution, relative to the total weight of the solution. Commercial solutions are available, for example as Agrotain® Ultra (Koch, US), N Yield™ (Eco Agro, The Netherlands), Rhodia Ag-Rho™ N Protect B (Solvay, Germany), Iper N-Protect Liquid (Van Iperen, The Netherlands) and BASF Limus (BASF, Germany).

In embodiments where the urease inhibitor nBTPT is used as a liquid, dissolved into a carrier, it can be used as a powder, dissolved in propylene glycol, for example as 17,5 weight% of nBTPT. Solid nBTPT may also be used as a 25 weight% solution in diethylene glycol monobutyl ether.

Experiments showed that, in compositions according to the invention, less urease inhibitor of the type phosphoric triamide, in particular N-(n-butyl) thiophosphoric triamide (nBTPT) needs to be used than is commonly employed in the prior art. For example, according to the invention, an amount of around 0.05 weight% is recommended, while for the use of Agrotain® Ultra, an amount of 0.09 weight% is recommended. This finding can at least partly be attributed to the fact that in the compositions according to the invention, the urease inhibitor of the type phosphoric triamide, in particular N-(n-butyl) thiophosphoric triamide (nBTPT) is stabilized, while in the prior art, an overdose is needed to compensate for the degradation of the urease inhibitor and to increase shelf-live thereof. This finding also ensures that less urease inhibitor of the type phosphoric triamide, in particular N-(n-butyl) thiophosphoric triamide (nBTPT) is introduced into the environment.

In embodiments where the urease inhibitor is used in its solid form, it is used as a powder, in particular with a purity of 99 weight% or more. It is available, for example, from Sunfit Chemical Co. (China). In one embodiment, the urease inhibitor is in solid particulate form.

The urease inhibitor of the type phosphoric triamide, in particular N-(n-butyl) thiophosphoric triamide (nBTPT) can be applied to particles by common coating and blending techniques, well known to the skilled person, such as spray-coating and drum-coating.

### Alkaline or alkaline-forming compound:

From WO2017042194, it is known that adding an alkaline or alkaline-forming compound that is able to interact with ammonium sulphate to a UAS-based composition increases the stability of a urease inhibitor of the phosphoric triamide type. A range of inorganic and organic compound may be used in such compositions. As an inorganic compound it may be selected from the group of metal oxides, such as calcium oxide, magnesium oxide, zinc oxide, sodium oxide, aluminium oxide, barium oxide and copper oxide; carbonates, such as calcium carbonate, sodium carbonate, ammonium carbonate, barium carbonate; hydroxides, such as aluminium hydroxide, ammonium hydroxide, sodium hydroxide, potassium hydroxide, calcium hydroxide, magnesium hydroxide, iron hydroxide, barium hydroxide and tetraalkyl /aryl ammonium hydroxides; and acetates, such as sodium acetate, ammonium acetate, magnesium acetate, zinc acetate and barium acetate, and any mixture thereof.

As an organic compound, it may be selected from the group of organic bases, such as ammonia; amines, such as triethylamine, ethanolamine and triethanolamine; amides, such as sodium amide and magnesium diamide; adenines; amidines; guanidines; anilines; carbamates; thiazoles; triazoles; pyridines; imidazoles; benzimidazoles; histidines; phosphazenes, and any mixture thereof.

In one embodiment, the alkaline or alkaline-forming inorganic or organic compound is present in the composition at a level of 0.0001 to 1.0 weight%, in particular 0.01 to 1.0 weight%, more in particular 0.02 to 0.5 weight%, relative to the total weight of the composition. It is desirable to not use a too large amount of the alkaline or alkaline-forming compound. Using too much may modify the manufacturing process if the compound is added during it, or affect the properties of the particles, such as particle strength, flowability, or tendency to absorb water, when it is applied as a coating. Further, it is not economical to add unnecessary material to a commercialized product. So, it may be desirable to limit the amount of cation source to 1.0 weight% compared to the total weight of the urea-based blend composition. In one embodiment, the amount of alkaline or alkaline-forming compound is at most 0.5 weight%.

In one embodiment, the alkaline or alkaline-forming compound is selected from the group of calcium oxide, zinc oxide, magnesium oxide, calcium carbonate, and mixtures thereof. It was found that calcium oxide, zinc oxide, magnesium oxide and calcium carbonate were particularly suitable for use in urea-based blend compositions. They provide good stability of the urease inhibitor, are commercially available on large scale, not toxic to plants and present a low risk to human health. They were also found adapted to be used in manufacturing process, i.e. they do not disturb processes such as concentration/evaporation, granulation and/or drying, and/or as a coating. Advantageously, these metals (Ca, Zn and Mg) may also function as a nutrient element to plants in the soil.

In one embodiment, the alkaline or alkaline-forming compound is applied onto the urea-based blend composition in particulate form, is melt-mixed with one of the particulate components of the urea-based blend composition, or a combination thereof. It is well known in the field of fertilizer manufacturing that additional compounds can be added in two main ways. First, they can be added during the manufacturing process. Almost all manufacturing processes of fertilizer compositions involve the formation of a melt which is then granulated using various techniques known in the field. It is then possible to add the additional compounds in the melt before the granulation step. The alkaline or alkaline forming compound may be added in a stream of reagents used to prepare the melt, it may be added in the mother liquor of the melt, i.e. before a step of concentration/evaporation to reduce the water content of the composition, it may be added to the melt just before the granulation step. It is usually desirable to include a mixing step to ensure that the additional compounds are equally distributed in the melt to obtain homogeneous particles. Secondly, the alkaline or alkaline-forming compound may be added on the fertilizer particles. This allows a greater versatility of the plant where standard particles containing the main fertilizer nutrients are produced in a continuous way and the particles can then be modified according to market requirements or regulations.

The stabilizer may be a solid, in particular a particulate material, a liquid, or a suspension (solid in liquid).

In one embodiment, the stabilizer is applied as a coating to the particles of the urea-based blend composition, in particular to the urea-based compound in particulate form and/or to the component comprising an ammonium source in particulate form.

When in particulate form, the particle size (dp50) of the stabilizer is between 1 and 1000 µm, in particular between 10 and 500 µm, as determined by mesh sieve screening. For example, for CaO, a dp50 of about 22 µm was found most effective.

By including the stabilizer into the urea-based blend composition comprising a urea-based compound in particulate form, a component comprising an ammonium source in particulate form and a urease inhibitor of the type phosphoric triamide, the stability of the urease inhibitor of the type phosphoric triamide is greatly improved, leading, among others, to the possibility of a more prolonged storage while keeping the urease inhibition property, before subsequent use of said urea-based blend composition.

Within the context of this application, the wording "able to interact" means that the stabilizer is able to react in any way (ionic, covalent, chelating, etc.) with the component comprising an ammonium source in particulate form in order to immobilize the ammonium source and/or convert it into a form which is less reactive with the urease inhibitor of the type phosphoric triamide. This excludes, for example, organic alkaline solvents for the urease inhibitor of the type phosphoric triamide, which do not interact with the component comprising an ammonium source in particulate form.

The stabilizer is applied to the composition comprising the urea-based compound and thee component comprising an ammonium source in particulate form as a coating by common application techniques, such as coating and blending techniques, well known to the skilled person, such as spray-coating and drum-coating. It is preferred that the stabilizer and the urease inhibitor of the type phosphoric triamide is in intimate contact with each other, in order for the stabilizer to be effective. This can be achieved, in particular, through the application of the urease inhibitor of the type phosphoric triamide, the stabilizer and an optional anti-caking and/or moisture repellent and/or anti-dusting agent, to the particles, either successively, or simultaneously, for example as a liquid anti-caking and/or moisture repellent and/or anti-dusting agent comprising the urease inhibitor of the type phosphoric triamide and the stabilizer.

### Urea-based compound

In one embodiment, the urea-based compound is be selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN), urea ammonium sulphate (UAS), urea ammonium phosphate (UAP), urea potassium salts (UK) such as salts derived from mixtures of urea with MPO and/or SOP, or mixtures thereof. In one embodiment, the urea-based compound is urea.

The urea-based compound may be a granulated or prilled material that is commonly and widespread available. It may contain elemental sulphur, be coated with micronutrients or other nutrients, or be treated in any other way.

In one embodiment, the solid, particulate, urea-based blend composition comprises from about 40 to 99 weight% of a urea-based compound in particulate form.

In one embodiment, the particle size (dp50) of the urea-based compound in particulate form is between 1.0 and 6.0 mm, in particular between 2.0 and 4.0 mm, more in particular between 3.0 and 5.0 mm, even more in particular between 2.5 and 3.6 mm, as determined by mesh sieve screening. This size is a common size for particles suitable for agricultural applications. They can be easily spread in the filed with, for example, mechanical means, such as spreaders, and they dissolve into the soil in a reasonable amount of time.

### Component comprising an ammonium source

In one embodiment, the component comprising an ammonium source in particulate form is selected from the group of ammonium nitrate, calcium ammonium nitrate, ammonium sulphate nitrate, potassium ammonium nitrate, ammonium phosphate, such as mono-ammonium phosphate (MAP) and di-ammonium phosphate (DAP), ammonium sulphate (AS), urea ammonium sulphate, urea calcium ammonium nitrate, or mixtures thereof.

These components are well known in the field of agriculture.

The component may be a granulated or prilled material that is commonly and widespread available. It may contain elemental sulphur, be coated with micronutrients or other nutrients, or be treated in any other way.

Urea-based blend compositions are interesting in agriculture because of the possibility to provide several nutrients to the plants in a single application. For example, a blend composition comprising particles of urea and MAP provides nitrogen and phosphorus to plants. It is also easy to vary the relative amount of components in a blend composition depending on the requirements of the plants.

In one embodiment, the urea-based blend composition comprises from about 0.1 to 60 weight% of the component comprising an ammonium source in particulate form.

In one embodiment, the particle size (dp50) of the component comprising an ammonium source in particulate form is between 1.0 and 6.0 mm, in particular between 2.0 and 4.0 mm, more in particular between 3.0 and 5.0 mm, even more in particular between 2.5 and 3.6 mm, as determined by mesh sieve screening. This size is a common size for particles suitable for agricultural applications. They can be easily spread in the filed with, for example, mechanical means, such as spreaders, and they dissolve into the soil in a reasonable amount of time.

### Cation source

In its broadest scope, the urea-based blend composition according to the present disclosure comprises a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺.

A large range of metal ions are known to be able to fix ammonia and form metal ammine complexes. For an agricultural application, zinc, nickel or copper may be the cation source of choice since these elements are required by plants for their growth. So, adding them to the urea-based blend compositions not only solves the issues of urease inhibitor stability and ammonia emissions, but also provides an additional valuable nutrient to the crops. However, it is not sure how stable metal ammine complexes behave once they are distributed in a field, and whether the metal ammine complexes are absorbed by plants. It is usually accepted that metal sources with organic ligands such as EDTA are preferred sources of micronutrients for agricultural uses because of their stability, whereas metal salts tend to oxidize rapidly and become unavailable to plants.

In one embodiment, the cation source comprises Zn²⁺, in particular a zinc sulphate. Zinc is a particularly suitable choice for use in the present invention. It is widely available at a reasonable price, it is not toxic to humans and plants, so it does not introduce any additional precautions in the manufacture, distribution and handling of the fertilizer particles. It was found that zinc sulphate readily absorbs ammonia given off by the urea-based blend compositions. Zinc sulphate is available as an anhydrous complex or a hydrate, for example a monohydrate or heptahydrate. It may be desirable to limit the amount of water added to the urea-based blend composition, so the monohydrate or anhydrous zinc sulphate may be preferred to the heptahydrate. In one embodiment, the cation source comprises zinc sulphate anhydrous and/or zinc sulphate monohydrate.

In one embodiment, the cation source is present in the composition at a level of 0.0001 to 5.0 weight%, in particular 0.02 to 2.0 weight%, more in particular 0.05 to 1.0 weight%, relative to the total weight of the composition. The amount of cation source needs to be adjusted so that it can absorb most of the ammonia given off during storage. Overloading the fertilizer particle is not desirable as it may affect other properties of the particles, such as particle strength, flowability, or tendency to absorb water. Further, it is not economical to add unnecessary material to a commercialized product. So, it may be desirable to limit the amount of cation source to 5.0 weight% compared to the total weight of the urea-based blend composition. The amount of cation source may be adapted to the forecast of storage time for each particular batch. Ammonia is released regularly during storage, so the longer the fertilizer particles are stored, the higher loading of cation source should be.

In one embodiment, the weight ratio of alkaline or alkaline-forming compound to the cation source ranges from 1:20 to 1:2, in particular from 1:15 to 1:2, more in particular from 1:10 to 1:4. The rate of ammonia volatilization is proportional to the amount of alkaline or alkaline-forming compounds in the urea-based blend composition: the more alkaline compound, the higher the volatilization rate. So, it is desirable to adapt the amount of cation source that will fix the ammonia released to the amount of alkaline compound. In general, it was observed that an excess of cation source, in terms of weight% compared to the total weight of the composition, is desirable to obtain the desired effect on the ammonia volatilization.

### Anti-caking and/or moisture repellent and/or anti-dusting agent

In one embodiment, an anti-caking and/or moisture repellent and/or anti-dusting agent is applied onto the particulate components of the urea-based blend composition, wherein the agent is able to increase the moisture repellence of the urea-based compound in particulate form and/or the component comprising an ammonium source in particulate form. Furthermore, the agent may also be able to reduce the dust formation tendency of the composition. In one embodiment, the agent is a coating material. In one embodiment, the agent is a coating material and comprises a nonpolar material, in particular a liquid organic material, such as an oil, wax, resin or the like and any mixture thereof. The agent is present in the composition at a level 0 - 1 weight%, in particular 0.0001 -1.0 weight%, more in particular 0.02 - 0.5 weight%, even more in particular 0.1 - 0.2 weight%. Examples of suitable anti-caking and/or moisture repellent and/or anti-dusting agents are vegetable oil (e.g. rapeseed or neem), paraffin and Novoflow anti-caking and/or moisture repellence agents (Novochem Fertilizer Additives from The Netherlands, Kao from Spain, CECA from France, Arrmaz from USA, Clariant from Switzerland, PST Industry from France, etc.). The moisture repellent agent may also be a coating such as disclosed in EP 0768993 A1 (Norsk Hydro ASA) for a nitrogen-containing fertilizer, comprising at least a wax, an oil and a resin which is oil-soluble and miscible with wax.

### Further effects

It was also observed that, under bagged conditions without the presence of a head space, *i.e.* with the exclusion of moisture, atmospheric gasses such as oxygen, nitrogen, etc., the stability of the urease inhibitor of the type phosphoric triamide, in particular N-(n-butyl) thiophosphoric triamide (nBTPT), was further increased. Hence, in one embodiment, the present disclosure provides a packaged, in particular bagged, urea-based blend composition comprising a urea-based compound in particulate form, a component comprising an ammonium source in particulate form, a solid particulate urease inhibitor of the type phosphoric triamide, in particular N-(n-butyl) thiophosphoric triamide (nBTPT), and a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ an d Cr³⁺. As used in this application, "packaged" means that the product is shielded of from the environment such that it is in essence not in contact with moisture and atmospheric gasses during the period it is packaged. Hence, the package may be a bag, container, box, etc., being in principle all packaging without the presence of a head space that is filled with an atmosphere such as air. As used in this application, "bagged" means that the product is packaged in manageable unit amounts, such as 5 kg, 10 kg, 15 kg, 20 kg, 25 kg, 50 kg, or more, and usually packaged using a plastic material, in particular a foil, from such materials as paper, cardboard, polyethylene, polyvinyl and polycarbonate.

In one embodiment, the urea-based blend composition is packaged without the presence of a head space.

### Blends

In one embodiment, the solid, particulate urea-based blend composition according to the invention is a homogeneous blend composition, wherein all particles of the blend are randomly in intimate contact with each other.

According to one aspect of the invention, the solid, particulate, urea-based blend composition according to the present invention comprises:
- 40-99 weight% of a urea-based compound in particulate form;
- 0.1-60 weight% of a component comprising an ammonium source in particulate form;
- 0.0001 - 1.0 weight% of a urease inhibitor of the type phosphoric triamide, in particular N-(n-butyl) thiophosphoric triamide;
- 0.0001 - 1.0 weight% of an alkaline or alkaline-forming inorganic or organic compound that is able to interact with the component comprising an ammonium source in particulate form, in particular selected from the group of calcium oxide, calcium carbonate, zinc oxide and magnesium oxide, and mixtures thereof, more in particular wherein the compound is magnesium oxide;
- 0.0001 - 5.0 weight% of a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺; and
- 0 - 1 weight% of an anti-caking and/or moisture repellent and/or anti-dusting agent;
adding up to 100 weight%.

In one embodiment, the present disclosure relates to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium phosphate (MAP or DAP) in particulate form, potassium chloride (MOP), calcium oxide (as the stabilizer) and a zinc sulphate (as the cation source).

In one embodiment, the present disclosure relates to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium phosphate (MAP or DAP) in particulate form, magnesium oxide (as the stabilizer) and a zinc sulphate (as the cation source).

In one embodiment, the present disclosure relates to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium nitrate in particulate form, magnesium oxide (as the stabilizer) and a zinc sulphate (as the cation source).

In one embodiment, the present disclosure relates to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium sulphate (AS) in particulate form, a zinc sulphate, and magnesium oxide.

In one embodiment, the urea-based blend composition comprises a component comprising a potassium source and/or a phosphorus source, such as phosphate salts or potassium salts. Potassium and phosphorus are the two other primary nutrients for plants and crops.

In one embodiment, the urea-based blend composition comprises a source of secondary nutrient (magnesium, calcium, sulfur) and/or a source of micronutrients (manganese, iron, boron, molybdenum, zinc copper, nickel).

### Use of the blend composition

The solid, particulate urea-based blend composition according to the invention is in particular suitable as a fertilizer, in particular for supporting the growth of agricultural products on a sulphur - deficient soil, for supporting the growth of agricultural products on a phosphor - deficient soil, for supporting the growth of agricultural products on a potassium - deficient soil.

### Method

The invention further relates to a method for the manufacture of a solid, particulate urea-based blend composition comprising a urea-based compound in particulate form, a components comprising an ammonium source in particulate form, a urease inhibitor of the type phosphoric triamide, in particular N-(n-butyl) thiophosphoric triamide (nBTPT) and a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³.

In another aspect, a method for the manufacture of a solid, particulate, urea-based blend composition according to the present disclosure is provided. The method comprises the steps of:
1) providing a urea-based particulate material which is treated with a urease inhibitor in solid particulate or liquid form, in particular wherein the urease inhibitor is N-(n-butyl) thiophosphoric triamide (nBTPT);
2) providing a particulate material, comprising a component comprising an ammonium source;
3) providing an alkaline or alkaline-forming inorganic or organic compound that is able to interact with the component comprising an ammonium source in particulate form;
4) providing a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺;
5) mixing the components provided in steps 1), 2), 3) and 4);
6) optionally, applying an agent to the particulate compounds, wherein the agent that is able to increase at least the anticaking and/or water-repellence and/or anti-dusting properties of said urea-based blend composition.

Steps 1), 2),3), 4) and 6) can be interchanged or steps 1), 2), 3), 4) and 6) can be performed simultaneously, for example as the addition of a liquid anti-caking and/or moisture repellent agent composition comprising the urease inhibitor of the type phosphoric triamide and the alkaline or alkaline-forming compound.

### Kit-of-parts

In another aspect, a kit of parts for use with a urea-based blend composition is provided. The kit of parts comprises an alkaline or alkaline-forming inorganic or organic compound that is able to interact with the component comprising an ammonium source in particulate form; a urease inhibitor of the type phosphoric triamide in solid particulate or liquid form, in particular wherein the urease inhibitor is N-(n-butyl) thiophosphoric triamide (nBTPT); a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺; optionally, an anti-caking and/or moisture repellent and/or anti-dusting agent.

Such composition or kit of parts can then be added to the urea-based blend composition, in particular to the particulate urea-based compound or to the component comprising an ammonium source in particulate form, to obtain the solid, particulate, urea-based blend composition comprising a urea-based compound in particulate form, a component comprising an ammonium source in particulate form, the stabilizer, a urease inhibitor of the type phosphoric triamide according to the invention and a cation source.

The preferred embodiments of the method according to the invention will now be illustrated by means of the following non-limitative examples.

### Experimental details:

### 1. Volatilization measurements (ammonia release 2L diffusion kit)

200 g of UAS product, treated with nBTPT/stabilizer/cation source are put in a 2L plastic container. Through the lid, a Draeger tube is placed for the measurement of vol% ammonia. The Draeger tube turns from yellow to bleu/purple when ammonia is absorbed by the tube. The amount of vol% ammonia released can be followed in time.

### 2. nBTPT measurements

For lab scale experiments, 1.2 kg of solid UAS fertilizer material was added to a lab scale drum. In a next step, the nBTPT/stabilizer material was slowly added. A residence time of 10 minutes was applied, and the rotating speed of the drum was consequently the same in each experiment. In case a moisture-repellent coating was added, a nebulizer was used and depending on the order of addition, the moisture-repellent coating was added before or after addition of the nBTPT material. Before use, the moisture-repellent coating was preheated to 80 °C. Larger scale experiments with amounts up to 40 kg of fertilizer material were performed in a concrete mixer.

Experiments 1 and 2 are conducted on homogeneous particles comprising urea ammonium sulphate; however, similar effects are expected on blend compositions comprising urea particles and ammonium sulphate particles.

### Experiment 1

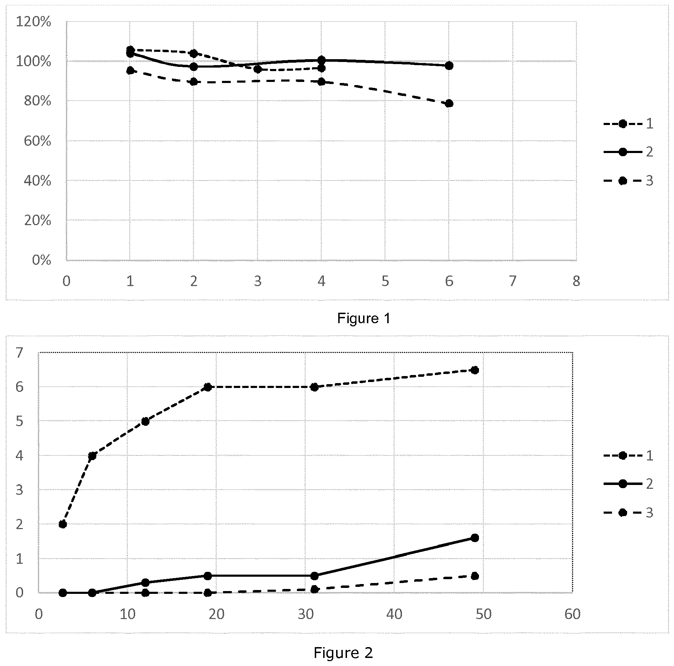

A urea ammonium sulphate-based particle containing about 76 weight% of urea and about 23 weight% of ammonium sulphate (i.e. 40 weight% of nitrogen and 5.5 weight% of sulphur, as expressed in S) was coated with 0.046 weight% of nBTPT, as urease inhibitor, and an inorganic stabilizer, magnesium oxide (0.046 or 0.023 weight%). Optionally, a zinc sulphate, anhydrous zinc sulphate or monohydrate zinc sulphate, was coated on the particles (0.46 weight%). The products were stored separately in bags at room temperature and ambient humidity over several weeks. Product samples were taken at different times from a bag and the amount of nBTPT still present was measured by HPLC according to the procedure CEN 15688-2007, the results are presented in Figure 1.

The X axis represents the time point (in weeks) when the samples were taken. The Y-axis indicates the amount of nBTPT (in % of amount recovered compared to initial samples). The "1" line represents the results for the reference sample where the coating comprised MgO and nBTPT (1/1 ratio, 462 ppm). The "2" line represents the results for the sample where the coating comprised ZnSO4·H2O, MgO and nBTPT (10/1/1 ratio, 462 ppm of nBTPT). The "3" line represents the results for a sample where the coating comprised anhydrous ZnSO4, MgO and nBTPT (10/1/1 ratio, 462 ppm of nBTPT). Samples were taken from each bag only once, as multiple openings increase the decomposition of nBTPT. It can be observed that more nBTPT is recovered in the presence of the monohydrate zinc sulphate, so the urease inhibitor is stabilized by the cation source.

An ammonia volatilization test was also carried out with the samples prepared above and the results are summarized in Figure 2. The X-axis indicates the time point (in days) when the samples were taken from the bags. The Y-axis indicates the amount of ammonia (in % of the amount of ammonium present initially in the product) that is evaporated. The "1" line represents the results for the reference sample where the coating comprised MgO and nBTPT (1/1 ratio, 462 ppm). The "2" line represents the results for the sample where the coating comprised ZnSO₄·H₂O, MgO and nBTPT (10/1/1 ratio, 462 ppm of nBTPT). The "3" line represents the results for a sample where the coating comprised anhydrous ZnSO₄, MgO and nBTPT (10/1/1 ratio, 462 ppm of nBTPT). After seven weeks of storage, the two products comprising the cation source showed a decrease in ammonia volatilization of respectively 60 % for the monohydrate compound, and 92% for the anhydrous compound.

### Experiment 2

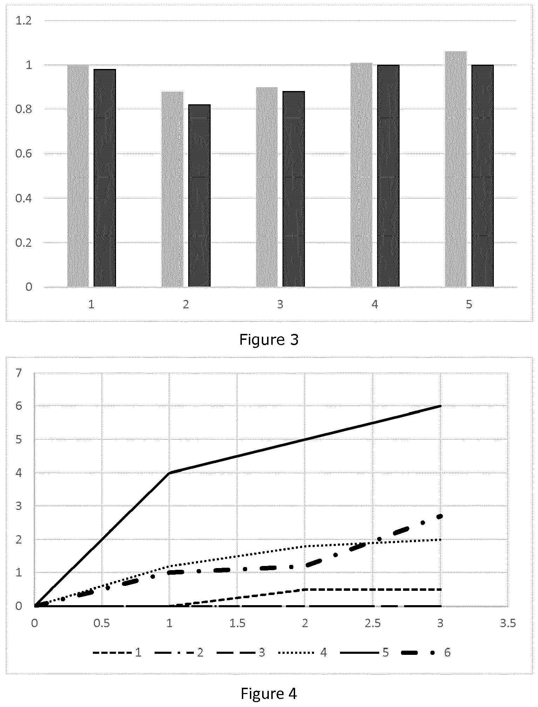

A urea ammonium sulphate-based particle containing about 76 weight% of urea and about 23 weight% of ammonium sulphate (i.e. 40 weight% of nitrogen and 5.5 weight% of sulphur, as expressed in S) was coated with 0.046 weight% of nBTPT, as urease inhibitor, and an inorganic stabilizer, magnesium oxide (0.046 weight%). Optionally, a cation source in solid particulate form, zinc sulphate, iron sulphate, nickel sulphate or manganese sulphate, was coated on the particles. The products were stored separately in bags at room temperature and ambient humidity over three weeks. Product samples were taken at different times and the amount of nBTPT still present was measured by HPLC according to the procedure CEN 15688-2007, the results are presented in Figure 3. The X-axis indicates the sample number: "1" comprises ZnSO₄·H₂O, MgO and nBTPT (3/0.5/1 weight ratio), "2" comprises FeSO₄·7H₂O, MgO and nBTPT (4.6/0.5/1 weight ratio), "3" comprises NiSO₄·6H₂O, MgO and nBTPT (4.4/0.5/1 weight ratio), "4" comprises MnSO₄·H₂O, MgO and nBTPT (2.8/0.5/1 weight ratio), "5" comprises MgO and nBTPT (1/1 weight ratio). The Y-axis indicates the fraction of nBTPT, compared to the amount present initially, recovered in the samples. For each product, two samples were taken: after 1 (left column for each sample number) and 3 weeks (right column). It can be observed that zinc sulphate and manganese sulphate do not lead to an increased decomposition of nBTPT compared to the sample only containing magnesium oxide.

Figure 4 describes the results of the ammonia volatilization tests performed on the same materials. The X axis represents the time point (in weeks) when the samples were taken. The Y-axis indicates the amount of ammonia (in % of the amount of ammonium present initially in the product) that is evaporated. The samples number are identical as in Figure 3, in addition line "6" comprises MgSO₄, MgO and nBTPT (10/1/1 weight ratio). The lines "2" and "3" are identical and located on the baseline (no ammonia detected during the three weeks of the experiment). It can be observed that the four cation sources and MgSO₄ are efficiently reducing the ammonia volatilization compared to the reference sample comprising only magnesium oxide.

## Claims

1. A solid, particulate, urea-based blend composition comprising a urea-based compound in particulate form, a component comprising an ammonium source in particulate form, a urease inhibitor of the type phosphoric triamide, an alkaline or alkaline-forming inorganic or organic compound that is able to interact with the component comprising an ammonium source in particulate form, selected from the group of metal oxides, metal carbamates, metal hydroxides, metal acetates and any mixtures thereof, or from the group of organic bases, such as ammonia, amines, amides, adenines, amidines, guanidines, anilines, carbamates, thiazoles, triazoles, pyridines; imidazoles, benzimidazoles, histidines, phosphazenes, and any mixture thereof **characterized in that** the urea-based blend composition further comprises a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺.

2. The urea-based blend composition according to claim 1, wherein the cation source is present in the composition at a level of 0.0001 to 5.0 weight%, in particular 0.02 to 2.0 weight%, more in particular 0.05 to 1.0 weight%, relative to the total weight of the composition.

3. The urea-based blend composition according to any one of claims 1 to 2, wherein the cation source comprises Zn²⁺, in particular a zinc sulphate.

4. The urea-based blend composition according to any one of claims 1 to 3, wherein the urease inhibitor is present at a level of 0.0001 to 1.0 weight%, in particular 0.02 to 0.2 weight%, more in particular 0.03 to 0.06 weight%, relative to the total weight of the urea-based blend composition.

5. The urea-based blend composition according to any one of claims 1 to 4, wherein the urease inhibitor of the type phosphoric triamide is a compound of formula: 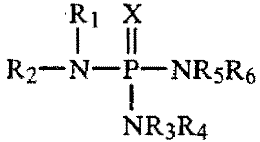 wherein:
X is oxygen or sulphur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl; or R₁ and R₂ together may form an alkylene or alkenylene chain which may optionally include one or more heteroatoms of divalent oxygen, nitrogen or sulphur completing a 4, 5, 6, 7, or 8 membered ring system; and
R₃, R₄, R₅ and R₆ are individually hydrogen or alkyl having 1 to 6 carbon atoms, in particular wherein the urease inhibitor is N-(n-butyl) thiophosphoric triamide (nBTPT.

6. The urea-based blend composition according to any one of claims 1 to 5, wherein the weight ratio of urease inhibitor of the type phosphoric triamide to the alkaline or alkaline-forming inorganic or organic compound in the urea-based blend composition ranges from 1:15 to 5:1, in particular from 1:10 to 2:1, more in particular from 1:5 to 2:1.

7. The urea-based blend composition according to any one of claims 1 to 6, wherein anyone or more selected from the group of the urease inhibitor of the type phosphoric triamide, the one or more alkaline or alkaline-forming inorganic or organic compound and the cation source, is applied onto the urea-based compound in particulate form or the component comprising an ammonium source in particulate form in liquid or in particulate form, is melt-mixed with the urea-based compound, or a combination thereof.

8. The urea-based blend composition according to any one of claims 1 to 7, wherein the alkaline-forming or alkaline compound is selected from the group of calcium oxide, calcium carbonate, zinc oxide and magnesium oxide, and mixtures thereof.

9. The urea-based blend composition according to any one of claims 1 to 8, wherein the alkaline-forming or alkaline compound is present in the composition at a level of 0.0001 to 1.0 weight%, in particular 0.01 to 1.0 weight%, more in particular 0.02 to 1.0 weight%, even more in particular 0.02 to 0.5 weight% relative to the total weight of the composition.

10. The urea-based blend composition according to any one of claims 1 to 9, wherein the composition comprises an anti-caking and/or moisture repellent and/or anti-dusting agent, applied onto the particulate components of the urea-based blend composition, in particular wherein the agent comprises at least a nonpolar material, in particular a liquid organic material, such as an oil, wax, resin or the like and any mixture thereof and is present in the composition at a level of 0.0001 -1.0 weight%, in particular 0.02 - 0.5 weight%, more in particular 0.1 - 0.2 weight%.

11. The urea-based blend composition according to any one of claims 1 to 10, wherein the weight ratio of the alkaline or alkaline-forming compound to the cation source ranges from 1:20 to 1:2, in particular from 1:15 to 1:2, more in particular from 1:10 to 1:4.

12. The urea-based blend composition according to any one of claims 1 to 11, wherein the composition contains:
- 40 - 99 weight% of a urea-based compound in particulate form;
- 0.1 - 60 weight% of a component comprising an ammonium source in particulate form;
- 0.0001 - 1.0 weight% of a urease inhibitor of the type phosphoric triamide, in particular N-(n-butyl) thiophosphoric triamide;
- 0.0001 - 1.0 weight% of an alkaline or alkaline-forming inorganic or organic compound that is able to interact with the component comprising an ammonium source in particulate form, in particular wherein the alkaline or alkaline-forming compound is selected from the group of calcium oxide, calcium carbonate, zinc oxide and magnesium oxide, and mixtures thereof;
- 0.0001 - 5.0 weight% of a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺, in particular wherein the cation source comprises Zn²⁺, more in particular a zinc sulphate.
- 0 - 1.0 weight% of an anti-caking and/or moisture repellent and/or anti-dusting agent;
adding up to 100 weight%.

13. The urea-based blend composition according to any one of claims 1 to 12, wherein the urea-based compound is selected from the group of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN), urea ammonium sulphate (UAS), urea ammonium phosphate (UAP), urea potassium salts (UK), or mixtures thereof.

14. The urea-based blend composition according to any one of claims 1 to 13, wherein the component comprising an ammonium source in particulate form is selected from the group of ammonium nitrate, calcium ammonium nitrate, ammonium sulphate nitrate, potassium ammonium nitrate, ammonium phosphate, such as mono-ammonium phosphate (MAP) and di-ammonium phosphate (DAP), ammonium sulphate (AS), urea ammonium sulphate, urea calcium ammonium nitrate, or mixtures thereof.

15. A method for the manufacture of a solid, particulate, urea-based blend composition according to any one of claims 1 to 14, the method comprising the steps of:
1) providing a urea-based particulate material which is treated with a urease inhibitor in solid particulate or liquid form, in particular wherein the urease inhibitor is N-(n-butyl) thiophosphoric triamide (nBTPT)
2) providing a particulate material, comprising a component comprising an ammonium source;
3) providing an alkaline or alkaline-forming inorganic or organic compound that is able to interact with the component comprising an ammonium source in particulate form;
4) providing a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺;
5) mixing the components provided in steps 1), 2), 3) and 4);
6) optionally, applying an agent to the particulate compounds, wherein the agent that is able to increase at least the anticaking and/or water repellence and/or anti-dusting properties of said urea-based blend composition.

16. A composition or a kit of parts, comprising:
a) an alkaline or alkaline-forming inorganic or organic compounds that is able to interact with the component comprising an ammonium source in particulate form;
b) a urease inhibitor of the type phosphoric triamide in solid particulate or liquid form, in particular wherein the urease inhibitor is N-(n-butyl) thiophosphoric triamide (nBTPT);
c) a cation source, other than the alkaline or alkaline-forming inorganic or organic compound, comprising a cation Cⁿ⁺ selected from the group of Fe²⁺, Fe³⁺, Mn²⁺, Zn²⁺, Cu⁺, Cu²⁺, Ni²⁺, Ag⁺, Pt²⁺, Ru²⁺, Co³⁺ and Cr³⁺;
c) optionally, an anti-caking and/or moisture repellent and/or anti-dusting agent.
